# EUROPÄISCHE PATENTSCHRIFT

(11) **EP 1 928 593 B1**
(45) Veröffentlichungstag und Bekanntmachung des Hinweises auf die Patenterteilung: **11.11.2009**
(21) Anmeldenummer: 06806770.1
(22) Anmeldetag: 14.09.2006
(51) Int. Cl.: B01J 13/02, A01N 25/28, A01N 25/04

(54) **NEUE AGROCHEMISCHE FORMULIERUNGEN**
NOVEL AGROCHEMICAL FORMULATIONS
NOUVELLES FORMULATIONS AGROCHIMIQUES

(30) Priorität: 23.09.2005 EP 05020749
(43) Veröffentlichungstag der Anmeldung: 11.06.2008
(73) Patentinhaber: BASF SE, 67056 Ludwigshafen (DE)
(72) Erfinder: AUWETER, Helmut, 67117 Limburgerhof (DE); BEHRENS, Sven Holger, 68159 Mannheim (DE); NGAI, To, Kowloon, Hong Kong (CN)
(86) Internationale Anmeldenummer: PCT/EP2006/066341
(87) Internationale Veröffentlichungsnummer: WO 2007/033931

(56) Entgegenhaltungen:
- EP-A- 0 551 796
- WO-A-2004/096422
- DE-A1-102004 035 737

## Beschreibung

Die vorliegende Erfindung umfasst Verfahren zum Herstellen einer Formulierung mit kontrollierter Wirkstoffabgabe, **dadurch gekennzeichnet, dass** man eine Pickering Emulsion vom Typ Lösungsmittel in Wasser auf einen festen Träger aufbringt, sowie Formulierungen mit kontrollierter Wirkstoffabgabe herstellbar nach dem vorstehend genannten Verfahren.

Umwelteinflüsse wie Wind, Sonne, Regen aber auch Grundwasser können eine unerwünschte Verteilung von Pflanzenschutzwirkstoffen bewirken. Hierdurch kann die Menge an Wirkstoff so reduziert werden, dass später auftretender Befall an Schadorganismen oder späteres Wachstum unerwünschter Pflanzen nicht verhindert werden kann.

Formulierungen mit kontrollierter Wirkstoffabgabe umgehen diese Problematik dadurch, dass über einen gewissen Zeitraum bestimmte Wirkstoffmengen verzögert abgegeben werden.

Hierbei ist es wünschenswert, eine möglichst effiziente Freisetzungsrate zu erzielen.

Aufgabe der vorliegenden Erfindung war somit, Formulierungen bereitzustellen, welche eine kontrollierte Wirkstoffabgabe aufweisen und bei welchen ein Teil des Wirkstoffes direkt zur Verfügung steht und ein weiterer Teil des Wirkstoffes verzögert freigegeben wird.

### Die Aufgabe wurde wie folgt gelöst:

Es wurde überraschend gefunden, dass Pickering Emulsionen vom Typ Lösungsmittel in Wasser, in welchen
(i) in den Lösungsmitteltröpfchen ein agrochemischer Wirkstoff gelöst oder dispergiert ist und
(ii) ein Polymer in partikulärer Form als Emulgator verwendet wird,
zur Herstellung von Formulierungen mit effizienter Freisetzungsrate geeignet sind.

Bei Pickering-Emulsionen wird guter Koaleszenzschutz durch die Einlagerung von Feststoffteilchen in die Phasengrenzfläche der Emulsion erreicht. Voraussetzung für die Ausbildung stabiler Emulsionen ist, dass der Feststoff von Öl- und Wasserphase benetzt wird.

Pickering Emulsionen für kosmetische bzw. dermatologische Zwecke werden z.B. in der EP-A 987008 beschrieben.

Die WO 2004/096422 offenbart Pickering Emulsionen für eine Vielzahl von Anwendungen, wobei die partikuläre Emulgatoren, mit denen Emulsionen stabilisiert werden, bei geeigneter Wahl der Parameter dazu führen, dass die Emulsionen gebrochen oder phaseninvertiert werden können.

Dass Pickering-Emulsionen vom Typ Lösungsmittel in Wasser, in welchen
(i) in den Lösungsmitteltröpfchen ein agrochemischer Wirkstoff gelöst oder dispergiert ist und
(ii) ein Polymer in partikulärer Form als Emulgator verwendet wird,
sich durch Verschmelzung der Polymerpartikel für die Herstellung von agrochemischen Formulierungen mit kontrollierter Wirkstoffabgabe eignen, insbesondere für die Beizung von Saatgut, geht aus dem Stand der Technik nicht hervor.

Der Begriff agrochemischer Wirkstoff / Pestizid bezeichnet hier mindestens einen Wirkstoff ausgewählt aus der Gruppe der Insektizide, Fungizide, Herbizide und/oder Safener, Wachstumsregulatoren (s. Pesticide Manual, 13th Ed. (2003)) verwendet wird. Hierbei können auch Kombinationen aus zwei oder mehreren der unten genannten Wirkstoffe verwendet werden.

Die folgende Liste von Insektiziden zeigt mögliche Wirkstoffe auf, soll aber nicht auf diese beschränkt sein:
A.1. Organo(thio)phosphate: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
A.2. Carbamate: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
A.3. Pyrethroide: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, gamma-cyhalothrin, permethrin, prallethrin, pyrethrin I und II, resmethrin, silafluofen, tau-fluvalinate, tefluthrin, tetramethrin, tralomethrin, transfluthrin;
A.4. Wachstumsregulatoren: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, a tetronic acid derivative of formula Γ¹, 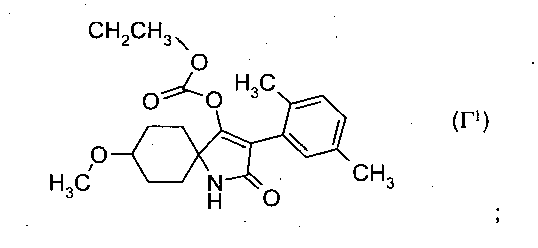
A.5. Nicotin Rezeptor Agonisten/ Antagonisten: clothianidin, dinotefuran, imidacloprid, thiamethoxam, nitenpyram, acetamiprid, thiacloprid;
A.6. GABA Antagonisten: acetoprole, endosulfan, ethiprole, fipronil, vaniliprole;
A.7. Macrolid-Insektizide: abamectin, emamectin, milbemectin, lepimectin, spinosad;
A.8. METI I Acarizide: fenazaquin, pyridaben, tebufenpyrad, tolfenpyrad;
A.9. METI II and III Verbindung: acequinocyl, fluacyprim, hydramethylnon;
A.10. Entkoppler-Verbindungen: chlorfenapyr;
A.11. Hemmer der oxidativen Phosphorylierung: cyhexatin, diafenthiuron, fenbutatin oxide, propargite;
A.12. Häutungsstörende Verbindungen: cryomazine;
A.13. Hemmer der Mixed-Function-Oxidase: piperonyl butoxide;
A.14. Natriumkanalblocker: indoxacarb, metaflumizone;
A.15. Verschiedene: benclothiaz, bifenazate, cartap, flonicamid, pyridalyl, pymetrozine, sulfur, thiocyclam und aminoisothiazole Verbindungen der Formel Γ², 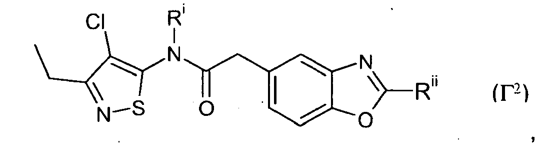 wobei Rⁱ für -CH₂OCH₂CH₃ or H und Rⁱⁱ für CF₂CF₂CF₃ or CH₂CH(CH₃)₃ steht, anthranilamide Verbindungen der Formel Γ³ 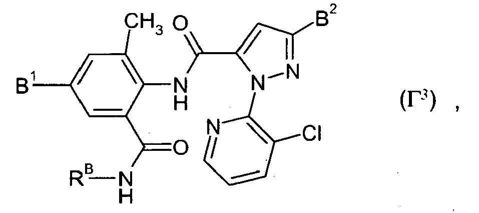 wobei B1 für Wasserstoff oder Chlor, B2 für Brom oder CF3, und RB für CH3 oder CH(CH3)2 steht, und malononitrile Verbindungen wie in JP 2002 284608, WO 02/89579, WO 02/90320, WO 02/90321, WO 04/06677, WO 04/20399, oder JP 2004 99597 beschrieben, N-R'-2,2-dihalo-1-R"cyclo-propanecarboxamide-2-(2,6-dichloro- α,α,α,α -tri-fluoro-p-tolyl)hydrazone oder N-R'-2,2-di(R"')propionamide-2-(2,6-dichloro- α,α,α,α -trifluoro-p-tolyl)-hydrazone, worin R' für methyl oder ethyl stehen, halo für Chlor oder Brom steht, R" für Wasserstoff oder methyl und R"' für methyl oder ethyl stehen;

Die folgende Liste von Fungiziden zeigt mögliche Wirkstoffe auf, soll aber nicht auf diese beschränkt sein:
1. Strobilurine
   Azoxystrobin, Dimoxystrobin, Enestroburin, Fluoxastrobin, Kresoxim-methyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethyl ester, 2-(ortho-((2,5-Dimethylphenyl-oxymethylen)phenyl)-3-methoxy-acrylsäuremethylester;
2. Carbonsäureamide
   - Carbonsäureanilide: Benalaxyl, Benodanil, Boscalid, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3,4-Dichlor-isothiazol-5-carbonsäure (2-cyano-phenyl) amid;
   - Carbonsäuremorpholide: Dimethomorph, Flumorph;
   - Benzoesäureamide: Flumetover, Fluopicolide (Picobenzamid), Zoxamide;
   - Sonstige Carbonsäureamide: Carpropamid, Diclocymet, Mandipropamid, N-(2-(4-[3-(4-Chlor-phenyl)-prop-2-inyloxy]-3-methoxy-phenyl)-ethyl)-2-methansulfonylamino-3-methyl-butyramid, N-(2-(4-[3-(4-Chlor-phenyl)-prop-2-inyloxy]-3-methoxy-phenyl)-ethyl)-2-ethansulfonylamino-3-methyl-butyramid;
3. Azole
   - Triazole: Bitertanol, Bromuconazole, Cyproconazole, Difenoconazole, Diniconazole, Enilconazole, Epoxiconazole, Fenbuconazole, Flusilazole, Fluquinconazole, Flutriafol, Hexaconazol, Imibenconazole, Ipconazole, Metconazol, Myclobutanil, Penconazole, Propiconazole, Prothioconazole, Simeconazole, Tebuconazole, Tetraconazole, Triadimenol, Triadimefon, Triticonazole;
   - Imidazole: Cyazofamid, Imazalil, Pefurazoate, Prochloraz, Triflumizole;
   - Benzimidazole: Benomyl, Carbendazim, Fuberidazole, Thiabendazole;
   - Sonstige: Ethaboxam, Etridiazole, Hymexazole;
4. Stickstoffhaltige Heterocyclylverbindungen:
   - Pyridine: Fluazinam, Pyrifenox, 3-[5-(4-Chlor-phenyl)-2,3-dimethyl-isoxazolidin-3-yl]-pyridin;
   - Pyrimidine: Bupirimate, Cyprodinil, Ferimzone, Fenarimol, Mepanipyrim, Nuarimol, Pyrimethanil;
   - Piperazine: Triforine;
   - Pyrrole: Fludioxonil, Fenpiclonil;
   - Morpholine: Aldimorph, Dodemorph, Fenpropimorph, Tridemorph;
   - Dicarboximide: Iprodione, Procymidone, Vinclozolin;
   - sonstige: Acibenzolar-S-methyl, Anilazin, Captan, Captafol, Dazomet, Diclomezine, Fenoxanil, Folpet, Fenpropidin, Famoxadone, Fenamidone, Octhilinone, Probenazole, Proquinazid, Pyroquilon, Quinoxyfen, Tricyclazole, 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on, 3-(3-Brom-6-fluoro-2-methyl-indol-1-sulfonyl)-[1,2,4]triazol-1-sulfonsäuredimethylamid;
5. Carbamate und Dithiocarbamate
   - Dithiocarbamate: Ferbam, Mancozeb, Maneb, Metiram, Metam, Propineb, Thiram, Zineb, Ziram;
   - Carbamate: Diethofencarb, Flubenthiavalicarb, Iprovalicarb, Propamocarb, 3-(4-Chlor-phenyl)-3-(2-isopropoxycarbonylamino-3-methyl-butyrylamino)-propionsäuremethylester, N-(1-(1-(4-cyanophenyl)ethansulfonyl)-but-2-yl) carbaminsäure-(4-fluorphenyl)ester;
6. Sonstige Fungizide
   - Guanidine: Dodine, Iminoctadine, Guazatine;
   - Antibiotika: Kasugamycin, Polyoxine, Streptomycin, Validamycin A;
   - Organometallverbindungen: Fentin Salze;
   - Schwefelhaltige Heterocyclylverbindungen: Isoprothiolane, Dithianon;
   - Organophosphorverbindungen: Edifenphos, Fosetyl, Fosetyl-aluminium, Iprobenfos, Pyrazophos, Tolclofos-methyl, Phosphorige Säure und ihre Salze;
   - Organochlorverbindungen: Thiophanate Methyl, Chlorothalonil, Dichlofluanid, Tolylfluanid, Flusulfamide, Phthalide, Hexachlorbenzene, Pencycuron, Quintozene;
   - Nitrophenylderivate: Binapacryl, Dinocap, Dinobuton;
   - Anorganische Wirkstoffe: Bordeaux Brühe, Kupferacetat, Kupferhydroxid, Kupferoxychlorid, basisches Kupfersulfat, Schwefel;
   - Sonstige: Spiroxamine, Cyflufenamid, Cymoxanil, Metrafenone.

Die folgende Liste von Herbizden zeigt mögliche Wirkstoffe auf, soll aber nicht auf diese beschränkt sein:
Verbindungen, die die Biosynthese von Lipiden inhibieren, z.B. Chlorazifop, Clodinafop, Clofop, Cyhalofop, Ciclofop, Fenoxaprop, Fenoxaprop-p, Fenthiaprop, Fluazifop, Fluazifop-P, Haloxyfop, Haloxyfop-P, Isoxapyrifop, Metamifop, Propaquizafop, Quizalofop, Quizalofop-P, Trifop, Alloxydim, Butroxydim, Clethodim, Cloproxydim, Cycloxydim, Profoxydim, Sethoxydim, Tepraloxydim, Tralkoxydim, Butylate, Cycloat, Diallat, Dimepiperat, EPTC, Esprocarb, Ethiolate, Isopolinate, Methiobencarb, Molinate, Orbencarb, Pebulate, Prosulfocarb, Sulfallat, Thiobencarb, Thiocarbazil, Triallat, Vernolat, Benfuresat, Ethofumesat und Bensulid;
ALS-Inhibitoren wie Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, Imazosulfuron, Iodosulfuron, Mesosulfuron, Metsulfuron, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, Imazamethabenz, Imazamox, Imazapic, Imazapyr, Imazaquin, Imazethapyr, Cloransulam, Diclosulam, Florasulam, Flumetsulam, Metosulam, Penoxsulam, Bispyribac, Pyriminobac, Propoxycarbazone, Flucarbazone, Pyribenzoxim, Pyriftalid und Pyrithiobac;
Verbindungen, die die Photosynthese inhibieren wie Atraton, Atrazine, Ametryne, A-ziprotryne, Cyanazine, Cyanatryn, Chlorazine, Cyprazine, Desmetryne, Dimethametryne, Dipropetryn, Eglinazine, Ipazine, Mesoprazine, Methometon, Methoprotryne, Procyazine, Proglinazine, Prometon, Prometryne, Propazine, Sebuthylazine, Secbumeton, Simazine, Simeton, Simetryne, Terbumeton, Terbuthylazine und Terbutryne;
Protoporphyrinogen-IX Oxidase-Inhibitoren wie Acifluorfen, Bifenox, Cchlomethoxyfen, Chlornitrofen, Ethoxyfen, Fluorodifen, Fluoroglycofen, Fluoronitrofen, Fomesafen, Furyloxyfen, Halosafen, Lactofen, Nitrofen, Nitrofluorfen, Oxyfluorfen, Fluazolate, Pyraflufen, Cinidon-ethyl, Flumiclorac, Flumioxazin, Flumipropyn, Fluthiacet, Thidiazimin, O-xadiazon, Oxadiargyl, Azafenidin, Carfentrazone, Sulfentrazone, Pentoxazone, Benzfendizone, Butafenacil, Pyraclonil, Profluazol, Flufenpyr, Flupropacil, Nipyraclofen und Etnipromid;
Herbizide wie Metflurazon, Norflurazon, Flufenican, Diflufenican, Picolinafen, Beflubutamid, Fluridone, Flurochloridone, Flurtamone, Mesotrione, Sulcotrione, Isoxachlortole, Isoxaflutole, Benzofenap, Pyrazolynate, Pyrazoxyfen, Benzobicyclon, amitrole, clomazone, Aclonifen, 4-(3-trifluormethylphenoxy)- 2-(4-trifluoromethylphenyl)pyrimidin, und 3-heterocyclyl-substituierte Benzoylderivate der Formel (vgl. WO-A-96/26202, WO-A-97/41116, WO-A-97/41117 und WO-A-97/41118) 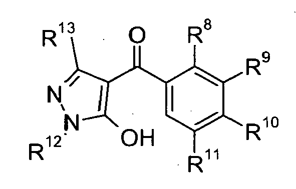
worin die Substituenten R⁸ to R¹³ folgende Bedeutung haben:
- R⁸, R¹⁰: Wasserstoff, Halogen, C₁-C₆-Alkyl, C₁-C₆-Haloalkyl, C₁-C₆-Alkoxy, C₁-C₆-Haloalkoxy, C₁-C₆-Alkylthio, C₁-C₆-Alkylsulfinyl oder C₁-C₆-Alkylsulfonyl;
- R⁹: bedeutet ein heterocyclisches Radikal aus der Gruppe bestehend aus Thiazol-2-yl, thiazol-4-yl, Thiazol-5-yl, Isoxazol-3-yl, Isoxazol-4-yl, Isoxazol-5-yl, 4,5-dihydroisoxazol-3-yl, 4,5-dihydroisoxazol-4-yl und 4,5-dihydroisoxazol-5-yl, worin die genannten Radikale einen oder mehrere Substituenten tragen können z.B. mono-, di-, tri- or tetrasubstituiert sein können durch Halogen, C₁-C₄-Alkyl, C₁-C₄-Alkoxy, C₁-C₄-Haloalkyl, C₁-C₄-Haloalkoxy oder C₁-C₄-Alkylthio;
- R¹¹: = Wasserstoff, Halogen oder C₁-C₆-Alkyl;
- R¹²: = C₁-C₆-Alkyl;
- R¹³: = Wasserstoff oder C₁-C₆-Alkyl.

Weitere geeignete Herbizide sind EPSP-Synthase-Inhibitoren wie Glyphosat;
Glutamin-Synthase-Inhibitoren wie Glufosinate und Bilanaphos;
DHP-Synthase-Inhibitoren wie Asulam;
Mitose-Inhibitoren wie Benfluralin, Butralin, Dinitramine, Ethalfluralin, Fluchloralin, i-Sopropalin, Methalpropalin, Nitralin, Oryzalin, Pendimethalin, Prodiamine, Profluralin, Trifluralin, Amiprofos-methyl, Butamifos, Dithiopyr, Thiazopyr, Propyzamide, Tebutam, Chlorthal, Carbetamide, Chlorbufam, Chlorpropham and Propham;
VLCFA-Inhibitoren wie Acetochlor, Alachlor, Butachlor, Butenachlor, Delachlor, Diethatyl, Dimethachlor, Dimethenamid, Dimethenamid-P, Metazachlor, Metolachlor, S-Metolachlor, Pretilachlor, Propachlor, Propisochlor, Prynachlor, Terbuchlor, Thenylchlor, Xylachlor, Allidochlor, CDEA, Epronaz, Diphenamid, Napropamide, Naproanilide, Pethoxamid, Flufenacet, Mefenacet, Fentrazamide, Anilofos, Piperophos, Cafenstrole, Indanofan und Tridiphan;
Inhibitoren für die Biosynthese von Cellulose wie Dichlobenil, Chlorthiamid, Isoxaben und Flupoxam;
Herbizide wie Dinofenat, Dinoprop, Dinosam, Dinoseb, Dinoterb, DNOC, Etinofen und Medinoterb;
Auxin-Herbizide wie Clomeprop, 2,4-D, 2,4,5-T, MCPA, MCPA Thioethyl, Dichlorprop, Dichlorprop-P, Mecoprop, Mecoprop-P, 2,4-DB, MCPB, Chloramben, Dicamba, 2,3,6-TBA, Tricamba, Quinclorac, Quinmerac, Clopyralid, Fluroxypyr, Picloram, Triclopyr und Benazolin;
Auxin-Transport-Inhibitoren wie Naptalam, Diflufenzopyr;
außerdem: Benzoylprop, Flamprop, Flamprop-M, Bromobutide, Chlorflurenol, Cinmethylin, Methyldymron, Etobenzanid, Fosamine, Metam, Pyributicarb, Oxaziclomefone, Dazomet, Triaziflam und Methyl bromide.

Der Begriff "Safener" hat die folgende Bedeutung: Es ist bekannt, dass in einigen Fällen bessere Herbizidverträglichkeit durch die gemeinsame Applikation spezifisch wirkender Herbizide mit organischen aktiven Verbindungen erreicht werden kann, welche selber herbizid wirken können. In diesen Fällen wirken diese Verbindungen als Antidot oder Antagonist und werden aufgrund der Tatsache, dass sie Schaden von Nutzpflanzen reduzieren bzw. verhindern als "Safener" bezeichnet.

Die folgende Liste zeigt mögliche Safener auf, soll aber nicht auf diese beschränkt sein:
benoxacor, cloquintocet, cyometrinil, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloroacetyl)-1,3-oxazolidine (R-29148), 4-(dichloroacetyl)-1-oxa-4-azaspiro[4.5]decane (AD-67; MON 4660) und oxabetrinil.

Die folgende Liste von Verbindungen mit wachstumsregulatorischer Wirkung zeigt mögliche Wirkstoffe auf, soll aber nicht auf diese beschränkt sein:
1-Naphthylacetamid, 1-Naphthylessigsäure, 2-Naphthyloxyessigsäure, 3-CPA, 4-CPA, Ancymidol, Anthrachinon, BAP, Butifos; Tribufos, Butralin, Chlorflurenol, Chlormequat, Clofencet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Gibberellic acid, Gibberillin, Guazatin, Imazalil, Indolylbuttersäure, Indolylessigsäure, Karetazan, Kinetin, Lactidichlor-ethyl, Maleic hydrazide, Mefluidide, Mepiquat-chlorid, Naptalam, Paclobutrazole, Prohexadione calcium, Quinmerac, Sintofen, Tetcyclacis, Thidiazuron, Triiodobezoicacid, Triapenthenol, Triazethan, Tribufos, Trinexapacethyl,Uniconazole.

Auf Basis der oben genannten Pickering Emulsionen lassen sich wässrige Mikrokapsellösungen herstellen, die wiederum zur Herstellung mikroporöser Filme auf Trägerstoffen verwendet werden können, wodurch agrochemische Formulierungen mit kontrollierter Wirkstoffabgabe erhalten werden.

Die vorliegende Erfindung umfasst somit Verfahren zum Herstellen einer flüssigen Formulierung umfassend Mikrokapseln bestehend aus einer festen, polymeren Schale und einem flüssigen Kern aus Lösungsmittel sowie einem im Lösungsmittel gelöstem oder dispergierten agrochemischen Wirkstoff, **dadurch gekennzeichnet, dass** man eine Pickering Emulsion vom Typ Lösungsmittel in Wasser herstellt, in welcher
(i) in den Lösungsmitteltröpfchen ein agrochemischer Wirkstoff gelöst oder dispergiert ist und
(ii) ein Polymer in partikulärer Form als Emulgator verwendet wird,
und die resultierende Pickering Emulsion
(a) bei Raumtemperatur inkubiert oder
(b) erwärmt wird.

Hierbei beträgt die Konzentration an Wirkstoff 0,1 bis 40% (w/w), bevorzugt 1 bis 20% (w/w), die Konzentration an Polymer 0,5 bis 30% (w/w), bevorzugt 1 bis 20%.

Das Verhältnis Wasser / Lösungmittel liegt von 99:1 bis 50:50, bevorzugt von 90:10 bis 70:30.

Unter dem Inkubieren der Pickering-Emulsion soll dabei eine Ruhezeit vor einem etwaigen nächsten Verarbeitungsschritt verstanden werden, in der die polymeren Emulgator-Partikel auf der Oberfläche der Emulsionströpfchen zu einer festen Schale verfilmen. Hierbei kann die Pickering Emulsion zum Beispiel einfach stehen gelassen werden oder geschüttelt oder gerührt werden. Optional kann die Lösung auch erwärmt werden, wobei die Siedetemperatur der Wasserphase und der Lösemittelphase nicht überschritten werden darf. Übliche Verfahren zur Erhöhung der Siedetemperatur wie die Zugabe von Salzen oder die Erhöhung des Druckes können ebenfalls optional angewandt werden.

Als Lösungsmittel kann jedes organische Lösungsmittel verwendet werden, das in Wasser eine Löslichkeit von weniger als 50%, vorzugsweise weniger als 25%, besonders bevorzugt weniger als 10% ganz besonders bevorzugt weniger als 10% hat, in einer äussert bevorzugten Ausführungsform weniger als 5%.

Beispiele für geeignete Lösungsmittel sind hydrophobe organische Lösungmittel wie Mineralöle, Alkylaromaten und Kohlenwasserstoffe sowie Fettsäurester oder Mischungen der vorstehend genannten Lösungsmittel.

Typische Beispiele für das hydrophobe organische Lösungsmittel sind Hisol SAS-296 (ein Gemisch von 1-Phenyl-1-xylethan und 1-Phenyl-1-ethylphenylethan, Handelsname von Nippon Petroleum Company), Hisol SAS-LH (Handelsname von Nippon Petroleum Company), Shellsol A (Handelsname von Shell Chemical Corporation), Shellsol AB (Handelsname von Shell Chemical Corporation), Shellsol E (Handelsname von Shell Chemical Corporation), Shellsol R (Handelsname von Shell Chemical Corporation), Shellsol T (Handelsname von Shell Chemical Corporation), Shellsol D-70 (Handelsname von Shell Chemical Corporation), Cactus Solvent HP-MN (mit 80% Methylnaphthalin, Handelsname von Nikko Petrochemical Company), Cactus Solvent HP-DMN (mit 80% Dimethylnaphthalin, Handelsname von Nikko Petrochemical Company), Cactus Solvent P-100 (Alkylbenzol mit 9 bis 10 Kohlenstoffatomen, Handelsname von Nikko Petrochemical Company), Cactus Solvent P-150 (Alkylbenzol, Handelsname von Nikko Petrochemical Company), Cactus Solvent P-180 (ein Gemisch aus Methylnaphthalin und Dimethylnaphthalin, Handelsname von Nikko Petrochemical Company), Cactus Solvent P-200 (ein Gemisch aus Methylnaphthalin und Dimethylnaphthalin, Handelsname von Nikko Petrochemical Company), Cactus Solvent P-220 (ein Gemisch aus Methylnaphthalin und Dimethylnaphthalin, Handelsname von Nikko Petrochemical Company), Cactus Solvent PAD-1 (Dimethylmonoisopropylnaphthalin, Handelsname von Nikko Petrochemical Company), Solvesso 100 (aromatischer Kohlenwasserstoff, Handelsname von ExxonMobil Chemical), Solvesso 150 (aromatischer Kohlenwasserstoff, Handelsname von ExxonMobil Chemical), Solvesso 200 (aromatischer Kohlenwasserstoff, Handelsname von ExxonMobil Chemical), Suwasol 100 (Toluol, Handelsname von Maruzen Petroleum Company), Suwasol 200 (Xylol, Handelsname von Maruzen Petroleum Company), Vinycizer 20 (Phthalsäurediisotridecylester, Handelsname von Kao Corporation), Vinycizer 40 (Adipinsäurediisobutylester, Handelsname von Kao Corporation), Vinycizer 50 (Adipinsäurediisodecylester, Handelsname von Kao Corporation), Vinycizer 85 (Naphthalsäuredialkylester, Handelsname von Kao Corporation), Vinycizer 105 (Naphthalsäuredidecylester, Handelsname von Kao Corporation), Vinycizer 124 (Naphthalsäuredialkylester, Handelsname von Kao Corporation), Excepal O-OL (Ölsäureoctylester, Handelsname von Kao Corporation), Excepal L-OL (Ölsäurelaurilester, Handelsname von Kao Corporation), Excepal OD-OL (Ölsäureoctyldodecylester, Handelsname von Kao Corporation), Toxanon PP-1000 (Polyoxypropylenglycol, Handelsname von Sanyo Chemical Industries), Nikkol IPA-A (Myristinsäureisopropylester, Handelsname von Nikko Chemical Company), Nikkol IPA-EX (Myristinsäureisopropylester, Handelsname von Nikko Chemical Company), Teclean N-30 (Handelsname von Nippon Petroleum Company), Teclean N-32 (Handelsname von Nippon Petroleum Company), Teclean N-33 (Handelsname von Nippon Petroleum Company), Mineral oil 46P (Handelsname von Nichibeikoyu Company), Pesticidal Mineral Oil P (Handelsname von Nichibeikoyu Company), Pesticidal Oil H (Handelsname von Nichibeikoyu Company), Super Oil A (Handelsname von Nichibeikoyu Company), Super Oil B (Handelsname von Nichibeikoyu Company), Super Oil C (Handelsname von Nichibeikoyu Company), Super Oil D (Handelsname von Nichibeikoyu Company), Super Oil E (Handelsname von Nichibeikoyu Company), Super Oil F (Handelsname von Nichibeikoyu Company), Spindle Oil No. 1 (Handelsname von Nichibeikoyu Company), Spindle Oil No. 2 (Handelsname von Nichibeikoyu Company), Mineral Oil B (Handelsname von Nichibeikoyu Company), Mineral Oil C (Handelsname von Nichibeikoyu Company), Naphthesol M (Naphthen/Isoparaffin/Normalparaffin/Aroma = 75% oder mehr/5-10%/10% oder weniger/5% oder weniger, Handelsname von Nippon Petrochemical Company), Isosol 300 (Handelsname von Nippon Petrochemical Company), Isosol 400 (Handelsname von Nippon Petrochemical Company), Exxol D80 (ein Gemisch aus Paraffin und Cycloparaffin, Handelsname von ExxonMobil Chemical), Exxol D110 (Gemisch aus Paraffin und Cycloparaffin, Handelsname von ExxonMobil Chemical), Exxol D130 (Gemisch aus Paraffin und Cycloparaffin, Handelsname von ExxonMobil Chemical), Exxol D160 (Gemisch aus Paraffin und Cycloparaffin, Handelsname von ExxonMobil Chemical), Isopar E (Kerosin, Handelsname von ExxonMobil Chemical), Isopar G (Kerosin, Handelsname von ExxonMobil Chemical), Isopar H (Kerosin, Handelsname von ExxonMobil Chemical), Isopar M (Kerosin, Handelsname von ExxonMobil Chemical), Neo-Chiozol Isopar E (Kerosin, Handelsname von Chuo Chemical Company), IP Solvent 2028 (Isoparaffinöl, Idemitsu Petrochemical Company), IP Solvent 2835 (Isoparaffinöl, Idemitsu Petrochemical Company), Naplex 38 (Naphthenöl, Handelname von Mobil Petroleum Corporation), Whitelex 205 (Handelsname von Mobil Petroleum Corporation), Whitelex 207 (Handelsname von Mobil Petroleum Corporation), Whitelex 215 (Handelsname von ExxonMobil Chemical), Whitelex 247 (Handelsname von ExxonMobil Chemical), Whitelex 2210 (Handelsname von ExxonMobil Chemical), Whitelex 307 (Handelsname von ExxonMobil Chemical), Whitelex 309 (Handelsname von ExxonMobil Chemical) und Whitelex 326 (Handelsname von ExxonMobil Chemical) und Whitelex 335 (Handelsname von ExxonMobil Chemical).

Geeingete Ester sind Ester aliphatischer Monocarbonsäuren, Ester aliphatischer Di- oder Tricarbonsäuren, C₁₀-C₂₂-Fettsäureester, pflanzliche Trigylceride und Pflanzenöle,

Beispiele für Ester aliphatischer Monocarbonsäuren sind aliphatische Ester (wie Methyl-, Ethyl-, n-Propyl-, Isopropyl-, n-Butyl-, Isobutyl-, n-Pentyl-, Isopentyl-, Neopentyl-, n-Hexyl-, Isohexyl-, n-Heptyl-, Isoheptyl-, n-Octyl-, Ethylhexyl-, n-Nonyl- und Isononylester) und aromatische Ester (wie Benzylester) von Fettsäuren, wie Essigsäure (wie Essigsäureethylester und Essigsäure-n-butylester), Capronsäure, Caprylsäure, Caprinsäure, einer Mischung von Capryl- und Caprinsäure, Laurinsäure, Myristinsäure, einer Mischung von Laurin- und Myristinsäure, Palmitinsäure, Stearinsäure, einer Mischung von Palmitin- und Stearinsäure, Myristoleinsäure, Palmitoleinsäure, Ölsäure, Linolsäure oder Linolensäure, oder Carbonsäuren mit weiteren funktionellen Gruppen, wie Milchsäure (wie Milchsäureethylester, Milchsäurebutylester, Milchsäureethylhexylester oder Essigsäure-1-methoxy-2-propylester).

Eine bevorzugte Gruppe von Estern aliphatischer Monocarbonsäuren sind Pflanzenöle und tierische Öle. Unter dem Begriff Pflanzenöl im Sinne der vorliegenden Erfindung fallen Öle aus ölliefernden Pflanzen, wie Rapsöl, Sojaöl, Palmöl, Sonnenblumenöl, Baumwollöl, Maisöl, Leinöl, Kokosöl, Distelöl oder Rizinusöl. Unter dem Begriff tierisches Öl im Sinne der vorliegenden Erfindung fallen u.a. Öle aus ölliefernden Tieren, wie Talgöl. Andere Beispiele für Monocarbonsäureester sind die Umesterungsprodukte dieser Öle, wie Alkylester, wie Rapsölmethylester, wie Radia 7961 (Fina Chemicals, Belgien), oder Rapsölethylester.

Die Pflanzenöle sind vorzugsweise Ester von C₁₀-C₂₂- und vorzugsweise C₁₂-C₂₀-Fettsäuren. Diese C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. cis-Erucasäure, Isoerucasäure, Laurinsäure, Palmitinsäure, Myristinsäure, insbesondere C₁₈-Fettsäuren, wie Stearinsäure, Linolsäure oder Linolensäure.

Beispiele für C₁₀-C₂₂-Fettsäureester sind Ester, die durch Umsetzung von Glycerin oder Glycol mit C₁₀-C₂₂-Fettsäureestern erhältlich sind und z.B. in Ölen von ölliefernden Pflanzen enthalten sind, sowie C₁-C₂₀-Alkyl-C₁₀-C₂₂-Fettsäurester, wie sie z.B. durch Umesterung der Glycerin- oder Glycol-C₁₀-C₂₂-Fettsäureester mit C₁-C₂₀-Alkoholen (wie Methanol, Ethanol, Propanol oder Butanol) erhältlich sind. Die Umesterung kann nach an sich gut bekannten Verfahren erfolgen, wie sie z.B. beschrieben sind im Römps Chemie Lexikon, 9. Auflage, Band 2, Seite 1343, Thieme Verlag, Stuttgart.

Als C₁-C₂₀-Alkyl-C₁₀-C₂₂-Fettsäureester bevorzugt sind Methylester, Ethylester, n-Propylester, Isopropylester, n-Butylester, Isobutylester, n-Pentylester, Isopentylester, Neopentylester, n-Hexylester, Isohexylester, n-Heptylester, Isoheptylester, n-Octylester, 2-Ethylhexylester, n-Nonylester, Isononylester und Dodecylester. Als Glycerin- oder Glycol-C₁₀-C₂₂-Fettsäureester bevorzugt sind die einheitlichen oder gemischten Glycerin- oder Glycolester von C₁₀-C₂₂-Fettsäuren, insbesondere von Fettsäuren mit gerader Kohlenstoffzahl, wie cis-Erucasäure, Isoerucasäure, Laurinsäure, Palmitinsäure, Myristinsäure, insbesondere C₁₈-Fettsäuren, wie Stearinsäure, Linolsäure oder Linolensäure.

Beispiele für Ester aromatischer Monocarbonsäuren sind Ester von Benzoesäure (wie Benzoesäure-n-butylester, Benzoesäurebenzylester, Benzosäuredecylester, Benzoesäuredodecylester, Benzoesäurehexylester, Benzoesäureisostearylester, Benzoesäuremethylester, Benzoeoctadecylester, Benzoesäure-C₁₂-C₁₅-alkylester) oder Salicylsäure.

Beispiele für Ester aliphatischer Di- oder Tricarbonsäure sind Ester von Maleinsäure (Methylester, Ethylester), Diester- oder Triesterderivate von Adipinsäure (wie Adipinsäurediisopropylester (wie Crodamol® DA (Croda Oleochemicals, UK), Adipinsäurediisobutylester), Zitronensäure (wie Zitronensäuretributylester, Acetylzitronensäuretributylester), Glutarsäure, Bernsteinsäure (wie dibasische Ester: eine Mischung von Adipinsäure-, Glutarsäure- und Bernsteinsäuremethylester) oder Sebacensäure (wie Sebacen-n-octylester).

Beispiele für Ester aromatischer Dicarbonsäuren sind die Phthalsäureester (wie Phthalsäuredimethylester, Phthalsäurediethylester, Phthalsäuredibutylester oder Phthalsäurediisononylester).

Beispiele für Pflanzenöle wie sie in Form kommerziell erhältlicher Hilfsmittel für ölige Formulierungen verwendet werden, sind z.B. auf Basis von Rapsöl, wie Hasten® (Victorian Chemical Company, Australien, Hauptbestandteil Rapsölethylester), Actirob®B (Novance, Frankreich, Hauptbestandteil Rapsölmethylester), Rako-Binol® (Bayer AG, Deutschland, Hauptbestandteil Rapsöl), Renol® (Stefes, Deutschland, Hauptbestandteil Rapsölmethylester) oder Stefes Mero® (Stefes, Deutschland, Hauptbestandteil Rapsölmethylester).

Beispiele für pflanzliche Trigylceride sind Kokosöl Palmöl, Palmkemöl, Sonnenblumenöl, Olivenöl und dergleichen.

Neben der Verwendung eines der oben genannten Ester als Lösungsmittel ist auch die Verwendung von zwei oder mehr bevorzugt (d.h. es können auch Mischungen der oben genannten Ester eingesetzt werden).

Der mittlere Durchmesser der Mikrokapseln beträgt 0,1 bis 500µm, vorzugsweise 0,3 bis 500µm, besonders bevorzugt 0,5 bis 50µm.

Unter den Begriff Polymer sind Beispiele für geeignete Polymere sind Polyolefine wie Polyethylen, Polypropylen, Polybutylen und Polyisobutylen; Vinylpolymerisate wie Polyvinylchlorid, Polyvinylacetat, Polystyrol, Polyacrylnitril, Polyacrylate, Polymethacrylate; Polyacetale wie Polyoxymethylen; Polyester wie Polyhydroxybuttersäure, Polyhydroxyvaleriansäure, Polyalkylenterephtalate, Polyalkylenadipatterephtalate, Polybutylenadipatterephtalate; Polyesteramide; Polyetheramide; Polyamide; Polyimide; Polyether; Polyetherketone; Polyurethane, Polycarbonate, Polylactide und Epoxide sowie Copolymere aus Ethylen/Vinylacetat, Ethylen/(Meth)acrylaten, Styrol/AcryInitril, Styrol/Butadien, Styrol/Butadien/AcryInitril, Olefin/Maleinsäureanhydrid.

Bevorzugte Polymere sind beispielsweise Polyester. Besonders bevorzugt sind biologisch abbaubare Polybutylenadipatterephtalate wie sie in DE 4 440 858 beschrieben wurden (z.B. kommerziell erhältlich als Ecoflex® von BASF).

Die vorliegende Erfindung umfasst wässrige Mikrokapsellösungen umfassend Mikrokapseln bestehend aus einer festen, polymeren Schale und einem flüssigen Kern aus Lösungsmittel sowie einem im Lösungsmittel gelöstem oder dispergierten agrochemischen Wirkstoff herstellbar nach einem der oben genannten Verfahren.

Der Begriff "herstellbar nach einem der oben genannten Verfahren" ist gleichzusetzen mit dem Begriff "hergestellt durch eines der oben genannten Verfahren".

Den wässrigen Mikrokapsellösungen können auch übliche Hilfsmittel zugesetzt werden.

Hierbei beträgt die Konzentration an Hilfsmitteln 0,1 bis 10% (w/w), bevorzugt 1 bis 5%.

Der Begriff Hilfsmittel beschreibt oberflächenaktive Stoffe wie Netzmittel, Haftmittel oder Dispergiermittel, Schutzkolloide, Antischäumungsmittel, Verdicker, Frostschutzmittel, Bakterizide sowie, wenn es sich um Saatgutbeizformulierungen handelt, ggf. Kleber und/oder ggf. Farbstoffe.

Als Schutzkolloide kommen alle zur Formulierung von agrochemischen Wirkstoffen üblichen Schutzkolloide in Betracht, d.h. im vorliegenden Falle alle, dem Fachmann bekannten wasserlöslichen Polymere mit amphiphilem Charakter wie zum Beispiel Proteine, denaturierte Proteine, Polysaccharide, hydrophob modifizierte Stärken, und synthetische Polymere, bevorzugt Polyvinylalkohol, Polycarboxylate, Polyalkoxylate, Polyvinylamin, Polyethylenimin, Polyvinylpyrrolidon und deren Copolymere

Als Emulgatoren kommen alle zur Formulierung von agrochemischen Wirkstoffen üblichen nichtionischen, anionischen und kationischen Dispergiermittel in Betracht. Beispiele sind Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether, ferner Kondesationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkyl-arylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpoly-glykoletheracetal, Sorbitester, Ligninsulfitablaugen und Methylcellulose.

Als Verdicker, die in den erfindungsgemäßen Formulierungen enthalten sein können, kommen alle zur Formulierung von agrochemischen Wirkstoffen üblichen Verdicker in Betracht. Beispiele für Verdicker (d.h. Verbindungen, die der Formulierung ein pseudoplastisches Fließverhalten verleihen, d.h. hohe Viskosität im Ruhezustand und niedrige Viskosität im bewegten Zustand) sind beispielsweise Polysaccharide bzw. organische Schichtmineralien wie Xanthan Gum (Kelzan® der Fa. Kelco), Rhodopol® 23 (Rhone Poulenc) oder Veegum® (Firma R.T. Vanderbilt) oder Attaclay® (Firma Engelhardt).

Als Antischaummittel, die in den erfindungsgemäßen Formulierungen enthalten sein können, kommen alle zur Formulierung von agrochemischen Wirkstoffen üblichen Antischaummittel in Betracht. Beispiele für Antischaummittel sind Silikonemulsionen (wie z.Bsp. Silikon® SRE, Firma Wacker oder Rhodorsil® der Firma Rhodia), langkettige Alkohole, Fettsäuren, fluororganische Verbindungen und deren Gemische in Betracht. Bakterizide können zur Stabilisierung von wäßrigen Formulierungen zugesetzt werden. Als Bakterizide, die in den erfindungsgemäßen Formulierungen enthalten sein können, kommen alle zur Formulierung von agrochemischen Wirkstoffen üblichen Bakterizide in Betracht wie zum Beispiel Bakterizide basierend auf Diclorophen und Benzylalkoholhemiformal. Beispiele für Bakterizide sind Proxel® der Fa. ICI oder Acticide® RS der Fa. Thor Chemie und Kathon® MK der Firma Rohm & Haas.

Als Frostschutzmittel, die in den erfindungsgemäßen Formulierungen enthalten sein können, kommen alle zur Formulierung von agrochemischen Wirkstoffen üblichen Frostschutzmittel in Betracht. Geeignete Frostschutzmittel sind z.B. Ethylenglycol, Propylenglycol oder Glycerin, vorzgusweise Propylenglycol und Glycerin.

Als Farbstoffe kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe, sowie pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108

Als Kleber, die in den erfindungsgemäßen Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Die Bedeutung und entsprechende Verwendung der oben genannten Mittel richtet sich nach der Natur des Wirkstoffes.

Die Formulierungen mit kontrollierter Wirkstoffabgabe können hergestellt werden dass man (Verfahrensvariante 1)
(a) eine Pickering Emulsion vom Typ Lösungsmittel in Wasser auf einen festen Träger aufgebracht wird durch Inkontaktbringen des Trägers mit der Pickering Emulsion, wobei die Pickering Emulsion
   (i) Lösungsmitteltröpfchen umfasst, wobei in den Lösungsmitteltröpfchen ein agrochemischer Wirkstoff gelöst oder dispergiert ist und
   (ii) ein Polymer in partikulärer Form als Emulgator verwendet wird, und
(b) die in Schritt (a) erhaltene Mischung bei Raumtemperatur inkubiert wird oder die in Schritt (a) erhaltene Mischung erwärmt wird; und
(c) die in Schritt (b) erhaltene Mischung getrocknet wird;

In einem alternativen Verfahren (Verfahrensvariante 2) kann man
(a') eine Mikrokapsellösung, die wie weiter oben ausgeführt hergestellt wird, mit einem festen Träger versetzt; und
(b') die in Schritt (a') erhaltene Mischung trocknen.

Hierbei kann eine vorher hergestellte Mikrokapsellösung verwendet werden.

Alternativ kann man den Träger in eine direkt hergestellte Mikrokapsellösung einbringen (Verfahrensvariante 3), wobei man
(a") eine Pickering Emulsion vom Typ Lösungsmittel in Wasser herstellt, in welcher
   (i) in den Lösungsmitteltröpfchen ein agrochemischer Wirkstoff gelöst oder dispergiert ist und
   (ii) ein Polymer in partikulärer Form als Emulgator verwendet wird, und diese Emulsion bei Raumtemperatur inkubiert oder erwärmt;
(b") die in Schritt (a") erhaltene Mischung mit einem Träger versetzt; und
(c") die in Schritt (b") erhaltene Mischung trocknet.

Hierbei können die oben erwähnten Hilfsmittel bei der Herstellung der Pickering Emulsion und/oder bei der Herstellung der Mikrokapseln und/oder bei der Zugabe des Trägers hinzugefügt werden.

In einer bevorzugten Ausführungsform wird das Verfahren nach der Verfahrensvariante 2 oder 3 durchgeführt.

Durch die oben genannten Verfahren werden Formulierungen mit kontrollierter Wirkstoffabgabe erhalten.

Die Formulierungen umfassen einen Träger, auf welchen ein mikroporöser Film aufgebracht ist, wobei sich in den Poren des Filmes Wirkstoff, der in einem Lösungsmittel gelöst oder dispergiert ist, befindet.

Je nach den im Verfahren zugesetzten Hilfsmitteln können im Film oder in den Poren des Filmes auch zugesetzte Hilfsmittel enthalten sein.

Die oben genannten Formulierungen sind Gegenstand der vorliegenden Erfindung.

Der Träger in den erfindungsgemäßen Formulierungen kann z.B. ein fester Trägerstoff sein, wie er für die Herstellung von festen agrochemischen Formulierungen (wie z.B.

Stäube (DP) oder Granulaten (GR, FG, GG, MG)) verwendet wird, Saatgut oder eine Folie, wie sie für den Obst und Gemüseanbau verwendet wird.

In einer bevorzugten Ausführungsform wird Saatgut oder ein fester Trägerstoff verwendet, ganz besonders bevorzugt wird Saatgut verwendet.

Geeignete feste Trägerstoffe sind z.B. Mineralerden, wie Kieselgele, hochdisperse Kiselsäuren, Silikate, Talkum, Kaolin, Attaclay, Kalkstein, Kalk, Kreide, Bolus, Löß, Ton / Tonerden, Talkum, Dolomit, Diatomeenerde, Calcium- und Magnesiumsulfat, Magnesiumoxid sowie gemahlene Kunststoffe, Düngemittel, wie z.B. Ammoniumsulfat, Ammoniumphosphat, Ammoniumnitrat, Harnstoffe-und pflanzliche Produkte, wie Getreidemehl, Baumrinden-, Holz- und Nussschalenmehl, Cellulosepulver und andere feste Trägerstoffe.

Der Begriff Saatgut umfasst Saatgut aller Arten, wie z.B. Körner, Samen, Früchte, Knollen, Stecklinge und ähnliche Formen. Bevorzugt beschreibt der Begriff Saatgut hier Körner und Samen.

Geeignetes Saatgut sind Getreidesaaten Halmfruchtsaaten, Hackfruchtsaaten, Ölsaaten, Gemüsesaaten, Gewürzsaatgut, Zierpflanzensaatgut, z.B. Saatgut von Hartweizen, Weizen, Gerste, Hafer, Roggen, Mais (Futtermais und Zuckermais), Soja, Ölsaaten, Kreuzblütler, Baumwolle, Sonnenblumen, Bananen, Reis, Raps, Rüben" Zuckerrüben, Futterrüben Eierpflanzen, Kartoffeln, Gras, (Zier-)Rasen, Futtergras, Tomaten, Lauch, Kürbis, Kohl, Eisberg Salat, Pfeffer, Gruken, Melonen, Brassica spp, Melonen, Bohnen, Erbsen, Knoblauch, Zwiebeln, Karotten, Knollengewächse wie Zuckerrohr, Tabbak, Weintrauben, Petunien und Geranien, Stiefmütterchen, Springkraut, bevorzugt Weizen, Mais, Soja und Reis.

Als Saatgut kann auch das Saatgut transgener oder durch herkömmliche Züchtungsmethoden erhaltener Pflanzen eingesetzt werden.

So kann Saatgut eingesetzt werden, das gegenüber Herbiziden, Fungiziden oder Insektiziden tolerant ist, z.B. gegenüber Sulfonylharnstoffen, Imidazolinonen oder Glufonsinat oder Glyphosate resistenen Pflanzen (s. z.B. EP-A-0242236, EP-A-242246) (WO 92/00377) (EP-A-0257993, U.S. Pat. No. 5,013,659) oder in transgenen Pflanzen, z.B. Baumwolle, die Bacillus thuringiensis toxin (Bt toxins) produzieren und dadurch gegenüber bestimmten Schadorganismen gegenüber resistent sind (EP-A-0142924, EP-A-0193259).

Weiterhin kann auch Saatgut von Pflanzen eingesetzt werden, die im Vergleich mit herkömmlichen Pflanzen modifizierte Eigenschaften aufweisen eingesetzt werden. Beispiele hierfür sind geänderte Stärkesynthese (e.g. WO 92/11376, WO 92/14827, WO 91/19806) oder Fettsäurezusammensetzungen (WO 91/13972).

In einer weiteren Ausführungsform der vorliegenden Erfindung kann das Saatgut vorher mit einem Wirkstofffreien Polymerfilm überzogen sein. Geeignete Verfahren sind dem Fachmann bekannt. So beschreibt die WO 04/049778 zum Beispiel ein Verfahren, in welchem in einem ersten Schritt vor dem Aufbringen einer Beizformulierung das Saatgut mit einem Wirkstofffreien Polymerfilm überzogen wird.

Wie oben erwähnt, kann der feste Träger auch eine Folie sein. Die mit der erfindungsgemäßen Formulierung beschichteten Folien, auf die ein mikroporöser Film aufgebracht wurde, werden vorzugsweise im Obst-und Gemüseanbau zur Abdeckung der wachsenden Pflanzen verwendet. Geeignete Folienmaterialen, die mit der erfindungsgemäßen Formulierung beschichtet werden können, sind Folien aus Polyethylen, Polyproplyen Polyestern, Polyamiden oder andere, die eine ausreichende Dicke aufweisen.Vorzugsweise ist der hier eingesetzte Wirkstoff ein Insektizid.

Wenn als Träger ein fester Trägerstoff oder eine Folie verwendet wird, umfasst die vorliegende Erfindung ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, **dadurch gekennzeichnet, daß** man die entsprechende Formulierung auf die jeweiligen Schädlinge (d.h. phytopathogenen Pilze und/oder unerwünschte Insekten oder Milben), deren Lebensraum oder die vor dem jeweiligen Schädling zu schützenden Pflanzen, den Boden und/oder auf unerwünschte Pflanzen und/oder deren Lebensraum einwirken lässt.

Wenn als Träger Saatgut verwendet wird, umfasst die vorliegende Erfindung Verfahren zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, **dadurch gekennzeichnet, dass** man Saatgüter von Nutzpflanzen wie oben beschrieben mit einem mikroporösen Film überzieht, welcher mindestens einen agrochemischen Wirkstoff enthält.

In einer Ausführungsform der oben genannten Erfindung wird, wenn als Wirkstoff mindestens ein Herbizid eingesetzt wird, das Saatgut vor dem Überzug mit dem mikroporösen Film entweder mit einem Wirkstoff-freien Polymerfilm überzogen (s.o.) und/oder das Herbizid in Kombination mit einem Safener eingesetzt, und/oder Saatgut von Pflanzen verwendet, die gegen das eingesetzte Herbizid resistent sind.

Der Begriff phytopathogene Pilze beschreibt ist aber nicht beschränkt auf folgende Spezies: Alternaria spp. an Reis, Gemüse, Sojabohnen, Raps, Zuckerrübe und Früchen, Aphanomyces spp. an Zuckerrübe und Gemüse, Bipolaris and Drechslera spp.

Mais, Getreide, Reis und Zierrasen, Blumeria graminis (powdery mildew) an Getreide, Botrytis cinerea (gray mold) an Erdbeeren, Gemüse, Zierblumen, Weintrauben, Bremia lactucae an Salat, Cercospora spp. an Mais, Soja, und Zuckerrübe, Cochliobolus spp. an Mais, Getreide, Reis (e.g. Cochliobolus sativus an Getreide, Cochliobolus miyabeanus an Reis), Colletotrichum spp. an Soja und Baumwolle, Drechslera spp. an Getreide und Korn / Mais, Exserohilum spp. an Mais, Erysiphe cichoracearum und Sphaerotheca fuliginea an Gurken, Erysiphe necator an Weintrauben, Fusarium and Verticillium spp. an unterschiedlichen Pflanzen, Gaeumannomyces graminis an Getreide, Gibberella spp. an Getreide und Reis (e.g. Gibberella fujikuroi an Reis, Gibberella zeae an Getreide), Grainstaining complex an Reis, Microdochium nivale an Getreide, Mycosphaerella spp. an Getreide, bananas and peanuts, Phakopsora pachyrhizi und Phakopsora meibomiae on soybeans, Phomopsis spp. an Soja und Sonnenblumen sunflower, Phytophthora infestans an Kartoffeln und Tomante, Plasmopara viticola an Weintrauben, Podosphaera leucotricha an Äpfeln, Pseudocercosporella herpotrichoides an Weizen und Gerste, Pseudoperonospora spp. an Hofpen und Gurke, Puccinia spp. an Getreide und Mais, Pyrenophora spp. an Getreide, Pyricularia oryzae an Reis,, Cochliobolus miyabeanus and Corticium sasakii (Rhizoctonia solani), Fusarium semitectum (and/or moniliforme), Cercospora oryzae, Sarocladium oryzae, S attenuatum, Entyloma oryzae, Gibberella fujikuroi (bakanae), Grainstaining complex (various pathogens), Bipolaris spp., Drechslera spp. und Pythium and Rhizoctonia spp. an Reis, Mais, Baumwolle, Sonnenblume, Raps, Raps (canola, oilseed rape), Gemüse, Zierrasen, Nüsse und weitere Pflanzen, Rhizoctonia solani an Kartoffel, Sclerotinia spp. an Rapsarten (canola/oilseed rape) und Sonnenblume, Septoria tritici and Stagonospora nodorum an Weizen, Uncinula necator an Weintrauben, Sphacelotheca reiliana an Mais, Thievaliopsis spp. an Soja und Baumwolle, Tilletia spp. an Getreiden, Ustilago spp. an Getreide, Mais, Zuckerrohr und, Venturia spp. (scab) an Äpfeln und Birnen;

Der Begriff unerwünschte Insekten- oder Milben beschreibt ist aber nicht beschränkt auf folgende Gattungen:
Millipeden (Diplopoda) z.B. Blaniulus spp
Ameisen (Hymenoptera), z.B.. Atta capiguara, Atta cephalotes, Atta laevigata, Atta robusta, Atta sexdens, Atta texana, Monomorium pharaonis, Solenopsis geminata, Solenopsis invicta, Pogonomyrmex spp und Pheidole megacephala,
Käfer (Coleoptera), z.B. Agrilus sinuatus, Agriotes lineatus, Agriotes obscurus und andere Agriotes spp, Amphimallus solstitialis, Anisandrus dispar, Anthonomus grandis, Anthonomus pomorum, Aracanthus morei, Atomaria linearis, Blapstinus spp, Blastophagus piniperda, Blitophaga undata, Bothynoderes punciventris, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus und andere Conoderus spp, Conorhynchus mendicus, Crioceris asparagi, Cylindrocopturus adspersus, Diabrotica (longicornis) barberi, Diabrotica semi-punctata, Diabrotica speciosa, Diabrotica undecimpunctata, Diabrotica virgifera und andere Diabrotica spp, Eleodes spp, Epilachna varivestis, Epitrix hirtipennis, Eutinobothrus brasiliensis, Hylobius abietis, Hyperä brunneipennis, Hypera postica, Ips typographus, Lema bilineata, Lema melanopus, Leptinotarsa decemlineata, Limonius californicus und andere Limonius spp, Lissorhoptrus oryzophilus, Listronotus bonariensis, Melanotus communis und andere Melanotus spp, Meligethes aeneus, Melolontha hippocastani, Melolontha melolontha, Oulema oryzae, Ortiorrhynchus sulcatus, Oryzophagus oryzae, Otiorrhynchus ovatus, Oulema oryzae, Phaedon cochleariae, Phyllotreta chrysocephala, Phyllophaga cuyabana und andere Phyllophaga spp, Phyllopertha horticola, Phyllotreta nemorum, Phyllotreta striolata, und andere Phyllotreta spp, Popillia japonica, Promecops carinicollis, Premnotrypes voraz, Psylliodes spp, Sitona lineatus, Sitophilus granaria, Sternechus pinguis, Sternechus subsignatus, und Tanymechus palliatus und andere Tanymechus spp,
Fliegen (Diptera) z.B. Agromyza oryzea, Chrysomya bezziana, Chrysomya hominivorax, Chrysomya macellaria, Contarinia sorghicola, Cordylobia anthropophaga, Dacus cucurbitae, Dacus oleae, Dasineura brassicae, Delia antique, Delia coarctata, Delia platura, Delia radicum, Fannia canicularis, Gasterophilus intestinalis, Geomyza Tripunctata, Glossina morsitans, Haematobia irritans, Haplodiplosis equestris, Hypoderma lineata, Liriomyza sativae, Liriomyza trifolii, Lucilia caprina, Lucilia cuprina, Lucilia sericata, Lycoria pectoralis, Mayetiola destructor, Muscina stabulans, Oestrus ovis, Opomyza florum, Oscinella frit, Pegomya hysocyami, Phorbia antiqua, Phorbia brassicae, Phorbia coarctata, Progonya leyoscianii, Psila rosae, Rhagoletis cerasi, Rhagoletis pomonella, Tabanus bovinus, Tetanops myopaeformis, Tipula oleracea und Tipula paludosa,
Heteroptera (Heteroptera), z.B. Acrosternum hilare, Blissus leucopterus, Cicadellidae z.B. Empoasca fabae, Chrysomelidae, Cyrtopeltis notatus, Delpahcidae, Dysdercus cingulatus, Dysdercus intermedius, Eurygaster integriceps, Euschistus impictiventris, Leptoglossus phyllopus, Lygus lineolaris, Lygus pratensis, Nephotettix spp, Nezara viridula, Pentatömidae, Piesma quadrata, Solubea insularis und Thyanta perditor,
Blattläuse und andere Homoptera, e.g. Acyrthosiphon onobrychis, Adelges laricis, Aphidula nasturtii, Aphis fabae, Aphis forbesi, Aphis glycines, Aphis gossypii, Aphis grossulariae, Aphis pomi, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes (Myzus) persicae, Myzus ascalonicus, Myzus cerasi, Myzus varians, Nasonovia ribis-nigri, Nilaparvata lugens, Pemphigus bursarius, Pemphigus populivenae, und andere Pemphigus spp, Perkinsiella saccharicida, Phorodon humuli, Psyllidae z.B. Psylla mali, Psylla piri und andere Psylla spp, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, und Viteus vitifolii;
Lepidoptera, for example Agrotis ypsilon, Agrotis segetum und andere Agrotis spp, Alabama argillacea, Anticarsia gemmatalis, Argyresthia conjugella, Autographa gamma, Bupalus piniarius, Cacoecia murinana, Capua reticulana, Cheimatobia brumata, Chilo suppresalis und andere Chilo spp,Choristoneura fumiferana, Choristoneura occidentalis, Cirphis unipuncta, Cnaphlocrocis medinalis, Cydia pomonella, Dendrolimus pini, Diaphania nitidalis, Diatraea grandiosella, Earias insulana, Elasmopalpus lignosellus, Eupoecilia ambiguella, Euxoa spp, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Lerodea eufala, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Momphidae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta,Sesamia nonagrioides und andere Sesamia spp, Sitotroga cerealella, Sparganothis pilleriana, Spodoptera frugiperda, Spodoptera littoralis, Spodoptera litura, Thaumatopoea pityocampa, Tortrix viridana, Trichoplusia ni und Zeiraphera canadensis,
Orthoptera, z.B. Acrididae, Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus und Tachycines asynamorus ;
Termiten (Isoptera), z.B. Calotermes flavicollis, Coptotermes spp, Dalbulus maidis, Leucotermes flavipes, Macrotermes gilvus, Reticulitermes lucifugus und Termes natalensis;
Thripse (Thysanoptera) z.B. Frankliniella fusca, Frankliniella occidentalis, Frankliniella tritici und andere Frankliniella spp, Scirtothrips citri, Thrips oryzae, Thrips palmi, Thrips simplex und Thrips tabaci,
Spinnentiere, z.B. Arachniden (Acarina), for example e.g. of the families Argasidae, Ixodidae und Sarcoptidae, z.B. Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, und Eriophyidae spp z.B. Aculus schlechtendali, Phyllocoptrata oleivora und Eriophyes sheldoni; Tarsonemidae spp z.B. Phytonemus pallidus und Polyphagotarsonemus latus; Tenuipalpidae spp z.B. Brevipalpus phoenicis; Tetranychidae spp z.B. Tetranychus cinnabarinus, Tetranychus kanzawai, Tetranychus pacificus, Tetranychus telarius und Tetranychus urticae, Panonychus ulmi, Panonychus citri, und Oligonychus pratensis;
Nematoden, insbesondere Pflanzenparasitäre Nematoden z.B. "root knot" Nematoden, Meloidogyne hapla, Meloidogyne incognita, Meloidogyne javanica, und andere Meloidogyne spp; cyst-forming nematodes, Globodera rostochiensis und andere Globodera spp; Heterodera avenae, Heterodera glycines, Heterodera schachtii, Heterodera trifolii, und andere Heterodera spp; Seed gall nematodes, Anguina spp; Stem und foliar nematodes, Aphelenchoides spp; Sting nematodes, Belonolaimus longicaudatus und andere Belonolaimus spp; Pine nematodes, Bursaphelenchus xylophilus und andere Bursaphelenchus spp; Ring nematodes, Criconema spp, Criconemella spp, Criconemoides spp, Mesocriconema spp; Stem und bulb nematodes, Ditylenchus destructor, Ditylenchus dipsaci und andere Ditylenchus spp; Awl nematodes, Dolichodorus spp; Spiral nematodes, Heliocotylenchus multicinctus und andere Helicotylenchus spp; Sheath and sheathoid nematodes, Hemicycliophora spp and Hemicriconemoides spp; Hirshmanniella spp; Lance nematodes, Hoploaimus spp; false rootknot nematodes, Nacobbus spp; Needle nematodes, Longidorus elongatus und andere Longidorus spp; Lesion nematodes, Pratylenchus neglectus, Pratylenchus penetrans, Pratylenchus curvitatus, Pratylenchus goodeyi und andere Pratylenchus spp; Burrowing nematodes, Radopholus similis und andere Radopholus spp; Reniform nematodes, Rotylenchus robustus und andere Rotylenchus spp; Scutellonema spp; Stubby root nematodes, Trichodorus primitivus und andere Trichodorus spp, Paratrichodorus spp; Stunt nematodes, Tylenchorhynchus claytoni, Tylenchorhynchus dubius und andere Tylenchorhynchus spp; Citrus nematodes, Tylenchulus spp; Dagger nematodes, Xiphinema spp; und andere Pflanzen parasitäte Nematoden.

Bekämpfung unerwünschten Pflanzenwuchses bedeutet die Bekämpfung/Zerstörung von Planzen, welche an Orten wachsen, an welchen sie unerwünscht sind, z.B. von Dicotyledonen Pflanzen der Arten: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Monocotyledonen Pflanzen der Arten: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera Beispiele

Beispiel 1 Ein erfindungsgmäßer Film des bio-abbaubaren Polymers Polyethylenadipateterephthalat (Ecoflex®, BASF), welcher als Wirkstoff das Insektizid Chlorpyrifos enthält, wurde auf die folgende Weise hergestellt:
153 mg of Chlorpyrifos wurden in 6 ml Oktanol gelöst. Diese Lösung wurde zugegeben zu 34 ml einer 1 %-igen Ecoflex®-Dispersion, die ferner als Stabilisator 0,125 % des anionischen Tensids Natriumdodecylsulfat (SDS) und 0,125 % des Zuckeresters Ryoto S-1670S enthält. Durch Homogenisierung über 3 Minuten mit einem Ultra-Turrax Homogenisator (18 mm Rührkopf, betrieben bei 8000 U/min) entsteht eine partikelstabilisierte Oktanol-in-Wasser-Emulsion mit einer typischen Tröpfchengröße zwischen einem und 15 m im Durchmesser. Rasterelektronenmikroskopie an einer nach dem Gefrierbruch-Prinzip preparierten Probe zeigt, dass die Emulsionströpfchen von einer adsorbierten Schicht von Ecoflex® Teilchen dicht umhüllt sind.

Anschließend wurde die Emulsion für 30 Minuten auf 60 °C erhitzt und schließlich bei 30 - 40 °C getrocknet, wobei auf dem Gefäßboden ein fester Film [von etwa 0.05 mm Dicke] zurückblieb.
Während ein Teil des ursprünglich in den Emulsionströpfchen enthaltenen Chlorpyrifos nun im Film eingeschlossen ist, befindet sich ein weiterer Anteil an der Filmoberfläche.

### Bestimmung des Wirkstoffgehalts im Inneren des Films

Für Anwendungen zur kontrollierten Wirkstofffreisetzung ist es nützlich, den im Film eingeschlossen Wirkstoffanteil näher zu bestimmen.
Hierzu wurden 27.3 mg eines mit Chlorpyrifos beladenen, nach der oben beschriebenen Vorschrift hergestellten Filmes in 15 ml Tetrahydrofuran (THF) aufgelöst, welches ein gutes Lösemittel sowohl für den Wirkstoff als auch für das Polymer darstellt. 0,5 Milliliter dieser Lösung wurden mit THF weiter auf ein Volumen von 20 ml verdünnt; von der verdünnten Lösung wurde ein UV-Vis-Spektrum aufgenommen.

In einem Vergleichsexperiment wurde der Film zuerst in 15 ml Ethanol gewaschen und getrocknet, bevor er wie zuvor beschrieben in THF aufgelöst mittels UV-Vis-Spektroskopie untersucht wurde.

Referenzspektren wurden an einer Serie von THF-Lösungen gemessen, die neben 33.5 mg/l Ecoflex® aus Ecoflex® Pellets auch Chlorpyrifos in Konzentrationen von 0 bis 24 mg/l enthielten. Ein geeigneter Vergleichsparameter, der den Chlorpyrifosgehalt klar widerspiegelt, ist das Intensitätverhältnis I₂/I₁ zweier charakteristischer Peaks im UV-Vis-Spektrum bei den Wellenlängen 244 nm und 290 nm.

Eine Betrachtung dieses Parameters für die Spektren des erfindungsgemäß hergestellten und in THF gelösten Filmes, sowie des zunächst in Ethanol gewaschenen und anschließend in THF gelösten Filmes zeigt, dass 24% des in der Filmherstellung eingesetzten Chlorpyrifos auch nach dem Waschen mit Ethanol im Film zurückbleibt, während 76% des Wirkstoffs fortgewaschen werden. Dieser mit Ethanol fortwaschbare Anteil befindet sich an der Filmoberfläche und steht damit in der Anwendung unmittelbar zur Verfügung, während der eingeschlossene Anteil erst im Zuge des Filmabbaus, also deutlich verzögert, freigesetzt wird.

## Patentansprüche

1. Verfahren zum Herstellen einer flüssigen Formulierung umfassend Mikrokapseln bestehend aus einer festen, polymeren Schale und aus einem flüssigen Kern aus Lösungsmittel sowie einem im Lösungsmittel gelösten oder dispergierten agrochemischen Wirkstoff, **dadurch gekennzeichnet, dass** man eine Pickering Emulsion vom Typ Lösungsmittel in Wasser herstellt, in welcher
(i) in den Lösungsmitteltröpfchen ein agrochemischer Wirkstoff gelöst oder dispergiert ist und
(ii) ein Polymer in partikulärer Form als Emulgator verwendet wird, und die resultierende Pickering Emulsion
(a) bei Raumtemperatur inkubiert oder
(b) erwärmt wird.

2. Verfahren nach Anspruch 1, **dadurch gekennzeichnet, dass** der mittlere Durchmesser der Mikrokapseln 0,1 bis 500µm beträgt.

3. Verfahren nach Anspruch 1 oder 2, **dadurch gekennzeichnet, dass** als Polymer ein biologisch abbaubares Polymer verwendet wird.

4. Wässrige Mikrokapsellösung umfassend Mikrokapseln bestehend aus einer festen, polymeren Schale und einem flüssigen Kern aus Lösungsmittel sowie einem im Lösungsmittel gelöstem oder dispergierten agrochemischen Wirkstoff herstellbar nach einem Verfahren nach einem der Ansprüche 1 bis 3.

5. Verfahren zum Herstellen einer Formulierung mit kontrollierter Wirkstoffabgabe, **dadurch gekennzeichnet, dass** man
(a) eine Pickering Emulsion vom Typ Lösungsmittel in Wasser auf einen festen Träger aufbringt, wobei
(i) die Pickering Emulsion Lösungsmitteltröpfchen umfasst, in denen ein agrochemischer Wirkstoff gelöst oder dispergiert ist und
(ii) ein Polymer in partikulärer Form als Emulgator verwendet wird, und
(b) die in Schritt (a) erhaltene Mischung bei Raumtemperatur inkubiert wird oder die in Schritt (a) erhaltene Mischung erwärmt wird; und
(c) die in Schritt (b) erhaltene Mischung getrocknet wird;
oder man
(a') eine Mikrokapsellösung nach Anspruch 4 mit einem festen Träger versetzt; und
(b') die in Schritt (a') erhaltene Mischung getrocknet wird;
oder man
(a") eine Pickering Emulsion vom Typ Lösungsmittel in Wasser herstellt, in welcher
(i) in den Lösungsmitteltröpfchen ein agrochemischer Wirkstoff gelöst oder dispergiert ist und
(ii) ein Polymer in partikulärer Form als Emulgator verwendet wird, und diese Emulsion bei Raumtemperatur inkubiert oder erwärmt;
(b") die in Schritt (a") erhaltene Mischung mit einem Träger versetzt; und
(c") die in Schritt (b") erhaltene Mischung trocknet.

6. Formulierung mit kontrollierter Wirkstoffabgabe umfassend einen Träger, auf welchen ein mikroporöser Film nach einem Verfahren gemäß Anspruch 5 aufgebracht ist, wobei sich in den Poren des Filmes ein agrochemischer Wirkstoff, der in einem Lösungsmittel gelöst oder dispergiert ist, befindet.

7. Formulierung nach Anspruch 6, **dadurch gekennzeichnet, dass** der Träger ein fester Trägerstoff ist.

8. Formulierung nach Anspruch 7, **dadurch gekennzeichnet, dass** der Träger Saatgut ist.

9. Formulierung nach Anspruch 7, **dadurch gekennzeichnet, dass** der Träger Saatgut ist, welches mit einem Polymerfilm überzogen worden ist.

10. Formulierung nach Anspruch 7, **dadurch gekennzeichnet, dass** der Träger eine Folie ist.

11. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, **dadurch gekennzeichnet, daß** man eine Formulierung nach Anspruch 7 oder 10 auf die jeweiligen Schädlinge (d.h. phytopathogenen Pilze und/oder unerwünschte Insekten oder Milben), deren Lebensraum oder die vor dem jeweiligen Schädling zu schützenden Pflanzen, den Boden und/oder auf unerwünschte Pflanzen und/oder deren Lebensraum einwirken lässt.

12. Verfahren zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, **dadurch gekennzeichnet, dass** man auf Saatgüter von Nutzpflanzen nach einem Verfahren gemäß Anspruch 5 mit einem mikroporösen Film aufbringt, wobei sich in den Poren des Filmes ein in einem Lösungsmittel gelöster oder dispergierter agrochemischer Wirkstoff befindet.

## Claims

1. A method for producing a liquid formulation comprising microcapsules consisting of a solid, polymeric shell and of a liquid core comprising solvent, and an agrochemical active substance dispersed or dissolved in the solvent, wherein a Pickering emulsion of the solvent in water type is produced in which
(i) an agrochemical active substance is dissolved or dispersed in the solvent droplets and
(ii) a polymer in particulate form is used as emulsifier, and the resulting Pickering emulsion
(a) is incubated at room temperature or
(b) is heated.

2. The method according to claim 1, wherein the average diameter of the microcapsules is 0.1 to 500 µm.

3. The method according to claim 1 or 2, wherein a biodegradable polymer is used as polymer.

4. An aqueous microcapsule solution comprising microcapsules consisting of a solid, polymeric shell and a liquid core comprising solvent, and an agrochemical active substance dispersed or dissolved in the solvent producible by a method according to any of claims 1 to 3.

5. A method for producing a formulation with controlled active substance release, wherein
(a) a Pickering emulsion of the solvent in water type is applied to a solid carrier, where
(i) the Pickering emulsion comprises solvent droplets in which an agrochemical active substance is dissolved or dispersed and
(ii) a polymer in particulate form is used as emulsifier, and
(b) the mixture obtained in step (a) is incubated at room temperature or the mixture obtained in step (a) is heated; and
(c) the mixture obtained in step (b) is dried;
or
(a') a microcapsule solution according to claim 4 is admixed with a solid carrier; and
(b') the mixture obtained in step (a') is dried;
or
(a") a Pickering emulsion of the solvent in water type is produced in which
(i) an agrochemical active substance is dissolved or dispersed in the solvent droplets and
(ii) a polymer in particulate form is used as emulsifier, and this emulsion is incubated or heated at room temperature;
(b") the mixture obtained in step (a") is admixed with a carrier; and
(c") the mixture obtained in step (b") is dried.

6. A formulation with controlled active substance release, comprising a carrier onto which a microporous film is applied by a method according to claim 5, an agrochemical active substance, which is dispersed or dissolved in a solvent, being located in the pores of the film.

7. The formulation according to claim 6, wherein the carrier is a solid carrier substance.

8. The formulation according to claim 7, wherein the carrier is seed material.

9. The formulation according to claim 7, wherein the carrier is seed material which has been coated with a polymer film.

10. The formulation according to claim 7, wherein the carrier is a film.

11. A method for controlling phytopathogenic fungi and/or undesired plant growth and/or undesired insect or mite infestation and/or for regulating the growth of plants, wherein a formulation according to claim 7 or 10 is allowed to act on the particular pests (i.e. phytopathogenic fungi and/or undesired insects or mites), their habitat or the plants to be protected against the particular pest, the ground and/or on undesired plants and/or their habitat.

12. A method for controlling undesired insect or mite infestation on plants and/or for controlling phytopathogenic fungi and/or for controlling undesired plant growth, wherein a microporous film is applied to the seed material of useful plants by a method according to claim 5, where an agrochemical active ingredient, dispersed or dissolved in a solvent, is located in the pores of the film.

## Revendications

1. Procédé pour la préparation d'une composition liquide comprenant des microcapsules consistant en une enveloppe polymère solide et en un noyau liquide à base de solvant ainsi que d'une substance active agrochimique dissoute ou dispersée dans le solvant, **caractérisé en ce qu'**on prépare une émulsion de Pickering du type solvant-dans-eau, dans lequel
(i) une substance active agrochimique est dissoute ou dispersée dans les gouttelettes de solvant et
(ii) on utilise comme émulsifiant un polymère sous forme particulaire, et l'émulsion de Pickering résultante
(a) est mise à incuber à la température ambiante ou
(b) chauffée.

2. Procédé selon la revendication 1, **caractérisé en ce que** le diamètre moyen des microcapsules va de 0,1 à 500 µm.

3. Procédé selon la revendication 1 ou 2, **caractérisé en ce qu'**on utilise en tant que polymère un polymère biologiquement dégradable.

4. Solution aqueuse de microcapsules, comprenant des microcapsules consistant en une enveloppe polymère solide et en un noyau liquide à base de solvant ainsi que d'une substance active agrochimique dissoute ou dispersée dans le solvant, pouvant être préparée conformément au procédé selon l'une quelconque des revendications 1 à 3.

5. Procédé pour la préparation d'une composition à libération réglée de substance active, **caractérisé en ce que**
(a) on applique sur un support solide une émulsion de Pickering du type solvant-dans-eau,
(i) l'émulsion de Pickering comprenant des gouttelettes de solvant dans lesquelles une substance active agrochimique est dissoute ou dispersée et
(ii) on utilise comme émulsifiant un polymère sous forme particulaire, et
(b) on met à incuber à la température ambiante le mélange obtenu dans l'étape (a) ou on chauffe le mélange obtenu dans l'étape (a) ; et
(c) on sèche le mélange obtenu dans l'étape (b) ;
ou
(a') on ajoute un support solide à une solution de microcapsules selon la revendication 4 ; et
(b') on sèche le mélange obtenu dans l'étape (a') ;
ou
(a") on prépare une émulsion de Pickering du type solvant-dans-eau, dans laquelle
(i) une substance active agrochimique est dissoute ou dispersée dans les gouttelettes de solvant et
(ii) on utilise comme émulsifiant un polymère sous forme particulaire, et on chauffe ou met à incuber à la température ambiante cette émulsion ;
(b") on ajoute un support au mélange obtenu dans l'étape (a") ; et
(c") on sèche le mélange obtenu dans l'étape (b").

6. Composition à libération réglée de substance active, comprenant un support, sur lequel un film microporeux est appliqué conformément à un procédé selon la revendication 5, une substance agrochimique, qui est dissoute ou dispersée dans un solvant, se trouvant dans les pores du film.

7. Composition selon la revendication 6, **caractérisée en ce que** le support est une matière porteuse solide.

8. Composition selon la revendication 7, **caractérisée en ce que** le support est une semence.

9. Composition selon la revendication 7, **caractérisée en ce que** le support est une semence qui a été revêtue avec un film en polymère.

10. Composition selon la revendication 7, **caractérisée en ce que** le support est un film.

11. Procédé pour la lutte contre des champignons phytopathogènes et/ou une croissance végétale indésirable et/ou l'attaque par des acariens ou des insectes indésirables et/ou pour la régulation de la croissance de plantes, **caractérisé en ce qu'**on laisse agir une composition selon la revendication 7 ou 10 sur les nuisibles respectifs (c'est-à-dire les champignons phytopathogènes et/ou les acariens ou les insectes indésirables), leur habitat ou les plantes à protéger contre le nuisible respectif, le sol et/ou sur les plantes indésirables et/ou leur habitat.

12. Procédé pour la lutte contre l'attaque par des acariens ou des insectes indésirables sur des plantes et/ou pour la lutte contre des champignons phytopathogènes et/ou pour la lutte contre une croissance végétale indésirable, **caractérisé en ce qu'**on applique un film microporeux sur des semences de plantes utiles, conformément à un procédé selon la revendication 5, une substance active agrochimique dissoute ou dispersée dans un solvant se trouvant dans les pores du film.
